# DEMANDE DE BREVET EUROPEEN

(11) **EP 0 827 862 A1**
(43) Date de publication de la demande: **11.03.1998**
(21) Numéro de dépôt: 97401756.8
(22) Date de dépôt: 21.07.1997
(51) Int. Cl.: B60N 2/00

(54) **Dispositif de verrouillage d'un élément d'armature de siège de véhicule automobile sur un élément de caisse de ce véhicule, et siège muni d'une paire de dispositifs de ce type**

(30) Priorité: 06.09.1996 FR 9610918
(71) Demandeur: ECIA - EQUIPEMENTS ET COMPOSANTS POUR L'INDUSTRIE AUTOMOBILE, F-25400 Audincourt (FR)
(72) Inventeur: Amorim, David, 45290 Nogent sur Vernisson (FR); Guillemard, Philippe, 45290 Nogent sur Vernisson (FR)
(74) Mandataire: Obolensky, Michel

(57) **Abrégé**

Le dispositif de verrouillage comprend une gâche (52) reliée à un plancher du véhicule et un pêne (48) relié à la partie d'assise (12A) de l'armature par des moyens (56,60,64) de réglage de l'écartement entre cette partie d'armature (12A) et la gâche (52). De préférence, les moyens de réglage comprennent un organe de prise (56), solidaire de la partie d'assise (12A) de l'armature, destiné à être bloqué entre un tambour de blocage (60) monté rotatif autour du pêne (48) et un étrier de blocage (64) porté par ce pêne. L'organe de prise (56) peut être déplacé suivant deux positions différentes correspondant à des écartements différents de la partie d'assise (12A) de l'armature et de la gâche (52) lorsque le pêne est accroché dans la gâche.

Application au réglage en site d'un siège de véhicule automobile.

## Description

La présente invention concerne un dispositif de verrouillage d'un élément d'armature de siège de véhicule automobile sur un élément de caisse de ce véhicule, et un siège muni d'une paire de dispositifs de ce type.

On connaît déjà dans l'état de la technique, notamment d'après GB 2 008 938 A, un dispositif de verrouillage d'un élément d'armature de siège de véhicule automobile sur un élément de caisse de ce véhicule, du type comprenant un pêne coopérant avec une gâche reliée à l'élément de caisse, le pêne étant relié à l'élément d'armature par des moyens de réglage de l'écartement entre cet élément d'armature et la gâche.

L'invention a notamment pour but de proposer un siège arrière amovible pour véhicule automobile, d'encombrement réduit, pouvant être réglé en site.

A cet effet, l'invention a pour objet un dispositif de verrouillage d'un élément d'armature de siège de véhicule automobile sur un élément de caisse de ce véhicule, du type précité, **caractérisé en ce que** le pêne a une forme générale de broche et est muni d'une extrémité d'accrochage dans la gâche, les moyens de réglage d'écartement comprenant un organe de prise solidaire de l'élément d'armature destiné à être bloqué entre un tambour de blocage, monté rotatif autour du pêne, et un étrier de blocage, porté par le pêne, enjambant le tambour d'une extrémité à l'autre de ce tambour, le tambour présentant un contour externe de contact avec l'organe de prise qui est évolutif, d'une part, angulairement autour du pêne pour permettre alternativement le blocage et le déblocage de l'organe de prise, et d'autre part, axialement le long du pêne pour définir au moins deux positions axiales différentes de l'organe de prise, rapprochée et éloignée de l'extrémité d'accrochage, correspondant, lorsque le pêne est accroché dans cette gâche, à deux écartements différents de l'élément d'armature et de la gâche.

Suivant d'autres caractéristiques de ce dispositif de verrouillage :
- l'organe de prise comprend une portion de tige, le contour évolutif du tambour étant délimité, d'une part, par au moins un méplat de déblocage de l'organe de prise, et d'autre part, par au moins deux rainures annulaires, espacées axialement, de positionnement axial de l'organe de prise, interrompues par le méplat ;
- le pêne comprend une extrémité de commande en rotation autour de son axe, opposée à son extrémité d'accrochage, cette dernière extrémité coopérant par emboîtement avec un orifice d'accrochage ménagé dans la gâche, l'extrémité d'accrochage et l'orifice d'accrochage étant délimités par des contours complémentaires d'immobilisation axiale du pêne par rapport à la gâche, l'extrémité d'accrochage étant déplaçable dans l'orifice d'accrochage par rotation de pêne autour de son axe entre des positions de verrouillage et de déverrouillage du pêne correspondant respectivement à des positions de séparation et de coopération des contours complémentaires d'immobilisation axiale ;
- le passage entre les positions de verrouillage et de déverrouillage du pêne se fait par rotation de ce pêne d'une fraction de tour, notamment d'un quart de tour, aussi bien dans un sens que dans l'autre;
- l'extrémité de commande coopère, lorsque l'organe de prise est dans sa position rapprochée de l'extrémité d'accrochage, avec un palier de guidage et de positionnement du pêne par rapport à l'élément d'armature porté par cet élément;
- le dispositif comprend des moyens d'interdiction du déverrouillage du pêne lorsque l'organe de prise est dans sa position éloignée de l'extrémité d'accrochage, ces moyens d'interdiction comprenant des butées complémentaires de blocage angulaire du pêne portées par l'organe de prise et l'extrémité de commande du pêne, les deux positions axiales rapprochée et éloignée de l'organe de prise correspondant respectivement à deux positions de contact ou de séparation des butées complémentaires de blocage angulaire.

L'invention a également pour objet un siège pour véhicule automobile, du type comprenant une armature d'assise reliée à un plancher de la caisse du véhicule, caractérisé en ce qu'il comporte une paire de dispositifs de verrouillage tels que définis ci-dessus, les pênes de ces dispositifs de verrouillage étant reliés à l'armature d'assise et coopérant avec des gâches reliées au plancher.

Suivant d'autres caractéristiques de ce siège :
- le siège comporte de plus des premiers moyens pour la commande commune des moyens de réglage d'écartement des deux dispositifs de verrouillage, ces premiers moyens de commande comportant une tringlerie de couplage des tambours définissant un parallélogramme articulé muni de quatre articulations matérialisées par les pênes et les extrémités d'une tringle de couplage articulées dans des ferrures solidaires des tambours, une manette de commande de tringlerie étant solidaire en rotation d'un des tambours ;
- le siège comporte de plus des seconds moyens pour la commande commune du déverrouillage des dispositifs de verrouillage, ces seconds moyens de commande comprenant deux leviers de commande solidaires en rotation des deux extrémités de commande des pênes, munis d'extrémités de manoeuvre respectives reliées entre elles par des moyens de longueur variable, et une manette de commande de déverrouillage reliée aux moyens de liaison par un câble à gaine de type Bowden ;
- les moyens de liaison comprennent une tringle munie d'une première extrémité accrochée sur un premier levier de commande et d'une seconde extrémité portant une bague d'arrêt d'une extrémité de la gaine, l'extrémité du câble débouchant par cette extrémité de la gaine étant accrochée sur le second levier de commande, de manière que l'actionnement du câble réduise la longueur des moyens de liaison et rapproche les deux leviers de commande pour faire tourner les pênes dans des sens opposés de déverrouillage;
- les butées complémentaires de blocage angulaire des pênes sont délimitées par des organes de positionnement transversal des étriers par rapport à l'armature, portés par les organes de prise et par les extrémités de manoeuvre des leviers de commande ;
- le siège comprend une paire de pieds avant et une paire de pieds arrière accrochés de façon amovible au plancher, les pieds avant étant constitués par les dispositifs de verrouillage et les pieds arrière étant accrochés au plancher par emboîtement dans des sabots correspondants reliés au plancher, les pieds arrière et les sabots étant délimités par des surfaces complémentaires d'emboîtement matérialisant un axe sensiblement transversal de pivotement du siège, ces surfaces d'emboîtement permettant la rotation des pieds arrière dans les sabots autour de l'axe de pivotement suivant une plage angulaire au-delà de laquelle les pieds arrière sont déboîtés des sabots, le réglage de l'écartement entre l'armature d'assise et les gâches permettant un réglage en site du siège par basculement de ce siège autour de l'axe de pivotement ;
- le siège comporte une armature tubulaire pliée de forme générale annulaire délimitant une traverse inférieure avant d'assise et une traverse supérieure arrière de dossier reliées entre elles par des longerons présentant chacun un coude séparant une partie d'assise et une partie de dossier de l'armature, les organes de prise étant fixés sur l'armature à proximité de la jonction de la traverse avant et des longerons, et les pieds arrière étant fixés sur les longerons à proximité de leur coude.

L'invention sera mieux comprise à la lecture de la description qui va suivre donnée uniquement à titre d'exemple et faite en se référant aux dessins annexés dans lesquels :
- la figure 1 est une vue en perspective d'un siège pour véhicule automobile, selon l'invention ;
- la figure 2 est une vue de côté du siège représenté à la figure 1;
- la figure 3 est une vue de face, à échelle agrandie, suivant la flèche 3 de la figure 2, des dispositifs de verrouillage du siège représenté sur les figures précédentes, l'armature du siège n'ayant pas été représentée pour des raisons de clarté;
- la figure 4 est une vue de dessus des dispositifs de verrouillage représentés sur la figure 3 ;
- les figures 5 et 6 sont des vues de côté, suivant la flèche 5 de la figure 4, d'un dispositif de verrouillage, dans lesquelles l'organe de prise est représenté respectivement dans deux positions axiales différentes ;
- la figure 7 est une vue similaire à la figure 5, en coupe axiale.

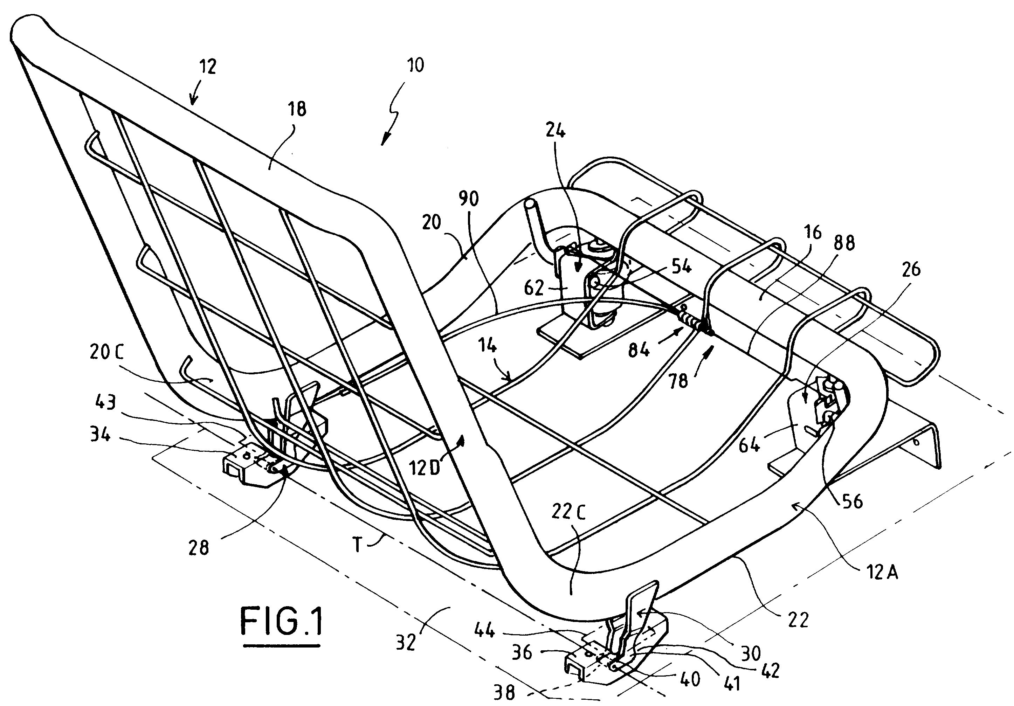

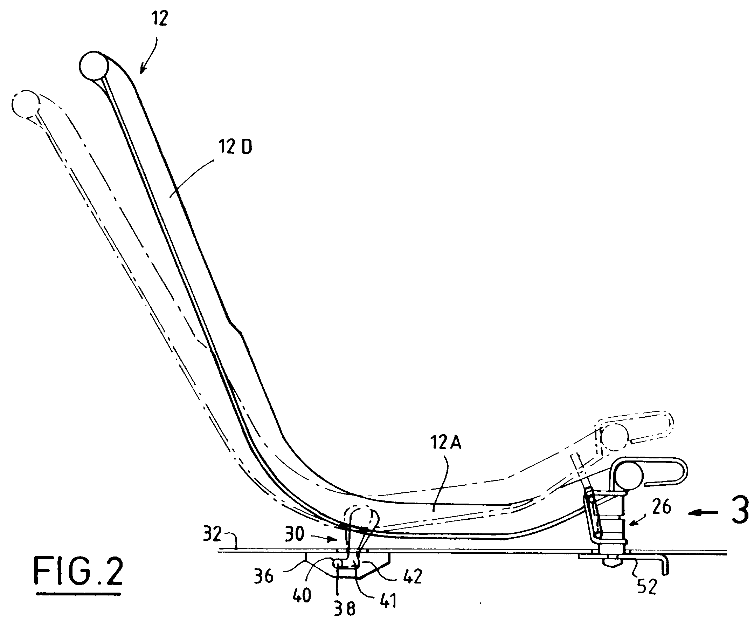

On a représenté sur les figures 1 et 2 un siège arrière amovible pour véhicule automobile, selon l'invention, désigné par la référence générale 10.

Ce siège 10 comporte une armature tubulaire métallique pliée 12, de forme générale annulaire, portant une nappe 14 en fils métalliques pour la suspension d'une matelassure classique non représentée sur les figures.

Dans ce qui suit, les orientations avant, arrière, gauche et droite correspondent aux orientations habituelles d'un occupant assis dans le siège.

L'armature tubulaire 12 délimite une traverse inférieure avant 16 d'assise et une traverse supérieure arrière 18 de dossier reliées entre elles par des longerons gauche 20 et droit 22.

Les longerons 20,22 présentent chacun un coude 20C,22C séparant des parties d'assise 12A et de dossier 12D de l'armature.

Le siège 10 comprend une paire de pieds avant gauche 24 et droit 26 et une paire de pieds arrière gauche 28 et droit 30 accrochés de façon amovible dans l'habitacle du véhicule, sur un plancher 32 de la caisse de ce véhicule. Une partie du plancher 32 est représentée en traits mixtes sur la figure 1 et en traits pleins sur la figure 2.

Les pieds avant 24,26 sont constitués par des dispositifs de verrouillage de l'armature 12 sur le plancher 32, que l'on décrira ultérieurement en désignant ces dispositifs par les mêmes références numériques que celles des pieds avant.

Les pieds arrière 28,30 sont fixés sur les longerons 20,22, à proximité de leur coude 20C,22C.

Les pieds arrière 28,30 sont accrochés au plancher 32 par emboîtement dans des sabots 34,36 correspondants fixés sur une face inférieure de ce plancher.

Les pieds arrière 28,30 et les sabots 34,36 sont délimités par des surfaces complémentaires d'emboîtement matérialisant un axe sensiblement transversal T de pivotement du siège 10.

Les surfaces complémentaires d'emboîtement sont délimitées par exemple, pour chaque pied arrière 28,30, d'une part, par un pivot 38, porté par l'extrémité libre du pied 28,30 tournée vers l'arrière du siège, coopérant avec un berceau 40 ménagé dans le sabot 34,36 correspondant, de concavité tournée vers l'avant du siège, et d'autre part, par un talon 41 d'immobilisation longitudinale du pied 28,30 coopérant avec un talon 42 complémentaire du sabot 34,36 correspondant.

Les talons 41,42 permettent la rotation du pied dans le sabot autour de l'axe T suivant une plage angulaire au-delà de laquelle le pied est déboîté du sabot.

Des ouvertures 43,44, ménagées dans le plancher 32 au droit des sabots 34,36, permettent l'accès des pieds arrière 28,30 à l'intérieur de ces sabots et, éventuellement, le positionnement transversal de ces pieds 28,30 par coopération de ces derniers avec des bords rectilignes longitudinaux des ouvertures 42,44.

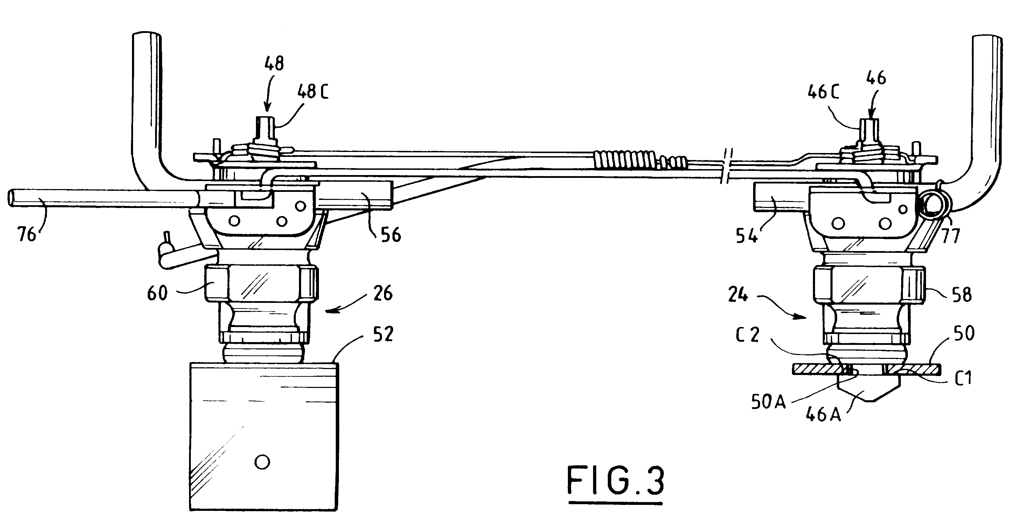

On décrira ci-dessous les dispositifs 24,26 constituant les pieds avant du siège, en se référant principalement aux figures 3 à 7.

Les deux dispositifs de verrouillage 24,26 ont des structures semblables.

Chaque dispositif 24,26 comprend un pêne 46,48 relié à la partie d'assise 12A de l'armature coopérant avec une gâche 50,52 fixée sous la face inférieure du plancher 32. Des ouvertures de ce plancher, non représentées sur les figures, permettent l'accès des pênes 46,48 aux gâches 50,52.

Le pêne 46,48 est relié à la partie d'assise 12A de l'armature par des moyens de réglage de l'écartement entre cette partie d'assise 12A et la gâche 50,52 correspondante.

Le réglage de l'écartement entre la partie d'assise 12A de l'armature et les gâches 50,52 des dispositifs de verrouillage permet un réglage en site du siège 10 par basculement de ce siège autour de l'axe de pivotement T. On notera que les parties d'assise 12A et de dossier 12D de l'armature basculent conjointement autour de l'axe T lors du réglage en site du siège.

Dans l'exemple illustré, le siège 10 peut être réglé en site dans deux positions, à savoir, une première position, dite "normale", telle que représentée en traits pleins sur la figure 2, et une seconde position, dite "de détente", telle que représentée en traits mixtes sur cette figure 2, dans laquelle les parties d'assise 12A et de dossier 12D sont inclinées vers l'arrière par rapport à la position normale du siège.

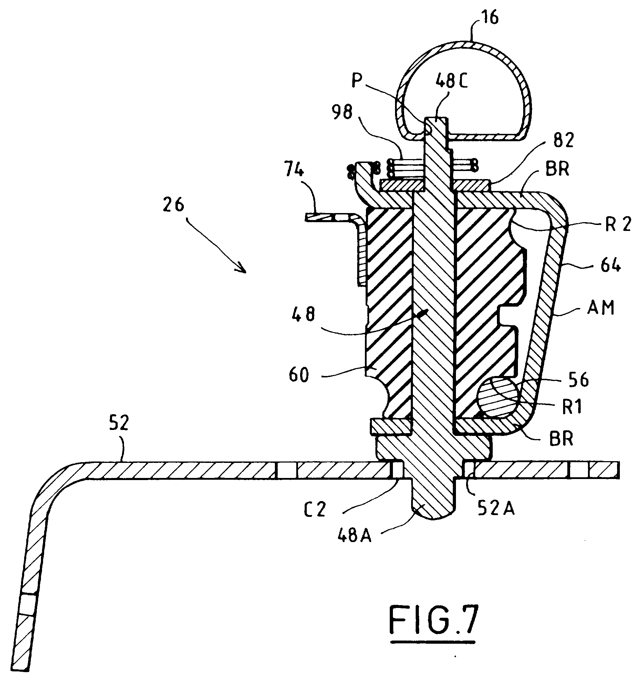

On notera que les pênes 46,48 ont une forme générale de broche (voir figure 7). Chaque pêne 46,48 est muni d'une extrémité 46A,48A d'accrochage dans la gâche 50,52 correspondante, et d'une extrémité 46C,48C, opposée à la précédente, de commande en rotation autour de l'axe du pêne.

On décrira ci-dessous les moyens de réglage d'écartement associés à chaque dispositif de verrouillage 24,26.

Ces moyens de réglage comprennent un organe de prise 54,56 fixé sur l'armature 12 à proximité de la jonction de la traverse avant 16 et du longeron 20,22 correspondant (voir figure 1).

L'organe de prise 54,56 est constitué, par exemple, par une portion transversale au siège d'une tige pliée soudée sur l'armature 12.

L'organe de prise 54,56 est destiné à être bloqué entre un tambour de blocage 58,60, notamment en plastique, monté rotatif autour du pêne 46,48 correspondant, et un étrier. de blocage 62,64 porté par ce pêne.

L'étrier 62,64, enjambant le tambour 58,60 d'une extrémité à l'autre de ce dernier, comporte une âme de blocage AM prolongée par deux branches BR traversées par le pêne 46,48.

Le tambour 58,60 présente un contour externe de contact avec l'organe de prise 54,56 qui est évolutif, d'une part, angulairement autour du pêne 46,48, et d'autre part, axialement le long de ce pêne.

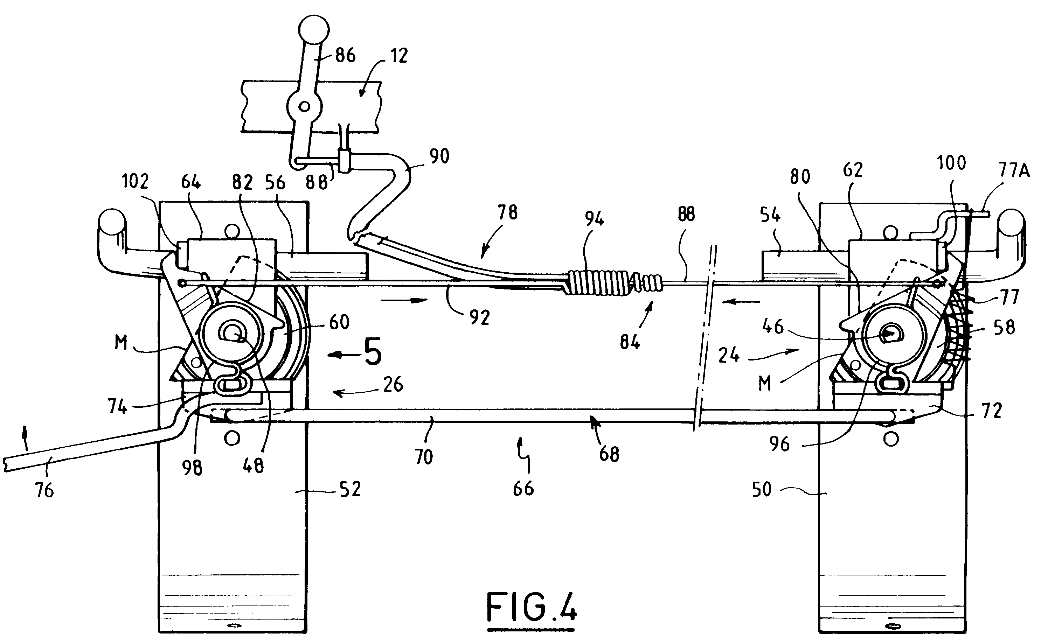

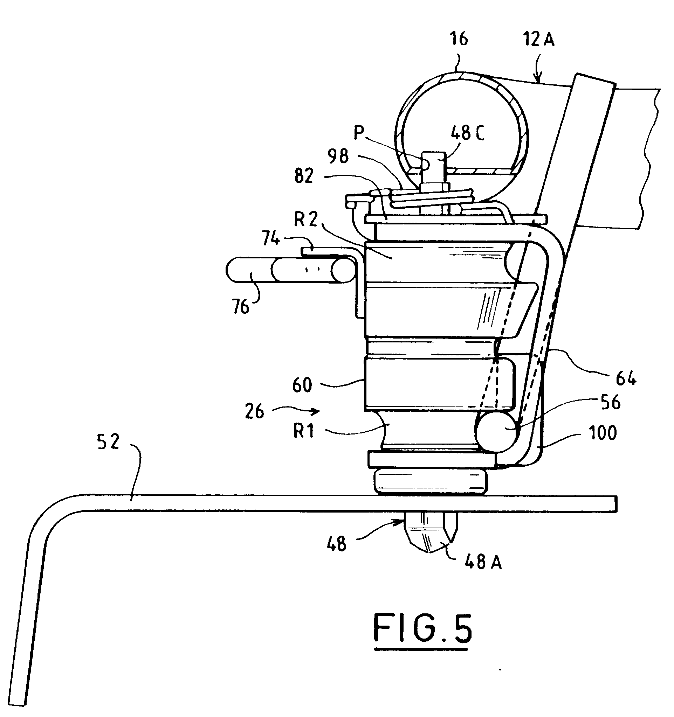

Le contour évolutif est délimité par exemple, d'une part, par au moins un méplat M (voir notamment figure 4), et d'autre part, par au moins deux rainures R1,R2 d'emboîtement de l'organe de prise 54,56, espacées axialement et interrompues par le méplat M (voir notamment figures 5 à 7).

L'évolution angulaire du contour du tambour permet alternativement le blocage et le déblocage (grâce au méplat M) de l'organe de prise 54,56. L'évolution axiale du contour du tambour définit au moins deux positions axiales différentes de l'organe de prise 54,56, rapprochée et éloignée de l'extrémité d'accrochage 46A,48A, correspondant, lorsque le pêne 46,48 est accroché dans cette gâche, à deux écartements différents de la partie d'assise 12A et de la gâche 50,52, ou encore aux deux positions normale et de détente du siège.

En se référant notamment aux figures 3 et 7, on voit que l'extrémité d'accrochage 46A,48A des pênes coopère par emboîtement avec un orifice d'accrochage 50A,52A ménagé dans la gâche 50,52 correspondante.

L'extrémité d'accrochage 46A,48A et l'orifice d'accrochage 50A,52A sont délimités par des contours complémentaires classiques C1,C2 d'immobilisation axiale du pêne 46,48 par rapport à la gâche 50,52.

L'extrémité d'accrochage 46A,48A est déplaçable dans l'orifice d'accrochage 50A,52A par rotation du pêne autour de son axe, entre des positions de verrouillage et de déverrouillage de ce pêne correspondant respectivement à des positions de séparation et de coopération des contours complémentaires d'immobilisation axiale.

De préférence, le passage entre les positions de verrouillage et déverrouillage du pêne se fait par rotation de ce dernier d'une fraction de tour, de préférence d'un quart de tour, aussi bien dans un sens que dans l'autre.

En se référant notamment aux figures 5 et 7, on voit que l'extrémité de commande 46C,48C de chaque pêne 46,48 coopère, lorsque l'organe de prise 54,56 correspondant est dans sa position rapprochée de l'extrémité d'accrochage 46A,48A, avec un palier P de guidage et de positionnement du pêne par rapport à la partie d'assise 12A de l'armature. De préférence, les paliers P sont délimités par des orifices ménagés dans la traverse avant 16 de l'armature.

Le siège 10 comprend des premiers moyens 66 pour la commande commune des moyens de réglage de l'écartement entre la partie d'assise 12A de l'armature et les gâches 50,52.

Ces premiers moyens de commande 66, représentés notamment aux figures 3 et 4, comprennent une tringlerie 68 de couplage des tambours 58,60 définissant un parallélogramme articulé.

Ce parallélogramme est muni de quatre articulations matérialisées par les pênes 46,48 et les extrémités d'une tringle de couplage 70 articulées dans des ferrures 72,74 fixées sur des méplats des tambours 58,60.

Une première manette 76 de commande de la tringlerie 68 est fixée de façon connue en soi sur la ferrure 74 solidaire d'un tambour 60.

Cette manette 76 permet de faire tourner les tambours 58,60 conjointement, entre une position de blocage des organes de prise 54,56, dans laquelle ces derniers sont enserrés entre le contour des rainures R1,R2 et l'âme AM des étriers 62,64, comme cela est représenté sur les figures 3 à 7, et une position de déblocage des organes de prise 54,56, dans laquelle ces derniers peuvent se déplacer axialement librement par rapport aux pênes 46,48, entre le méplat de déblocage M des tambours 58,60 et l'âme AM des étriers 62,64.

Un ressort de traction 77 rappelle élastiquement les tambours 58,60 en position de blocage des organes de prise 54,56. Ce ressort 77 est accroché, d'une part, sur une patte 77A solidaire de l'étrier 62 d'un dispositif de verrouillage 24, et d'autre part, sur la ferrure 72 solidaire du tambour 58 de ce dispositif 24.

Le siège 10 comprend également des seconds moyens 78 pour la commande commune du déverrouillage des deux dispositifs de verrouillage 24,26.

Ces seconds moyens de commande 78, représentés notamment aux figures 1,3 et 4, comprennent deux leviers de commande 80,82 solidaires en rotation, respectivement, des deux extrémités de commande 46C,48C des pênes, munis d'extrémités de manoeuvre respectives reliées entre elles par des moyens 84 de longueur variable.

Les seconds moyens de commande 78 comprennent également une seconde manette 86 de commande de déverrouillage reliée aux moyens de liaison de longueur variable 84 par un câble 88 à gaine 90 de type Bowden.

La seconde manette 86 est montée articulée de façon connue en soi sur l'armature 12 du siège.

Les moyens de liaison de longueur variable 84 comprennent, par exemple, une tringle 92 munie d'une première extrémité accrochée sur un premier levier de commande 82 et d'une seconde extrémité portant une bague 94 d'arrêt d'une extrémité de la gaine 90.

La tringle 92 est fabriquée, par exemple, en fil métallique du type corde à piano, la bague d'arrêt 94 étant formée par enroulement de l'extrémité correspondant de cette tringle 92.

L'extrémité du câble 88, débouchant par l'extrémité de la gaine 90 coopérant avec la bague d'arrêt 94, est accrochée sur le second levier de commande 80.

Les leviers de commande 80,82 sont sollicités élastiquement vers une position d'écartement entre eux au moyen de ressorts respectifs 96,98, à effet angulaire, reliés aux leviers 80,82 et aux ferrures 72,74.

L'actionnement de la seconde manette de commande 86, à l'encontre des forces élastiques de rappel des ressorts 96,98, sollicite le câble 88 en traction de manière à réduire la longueur des moyens de liaison 84 et à rapprocher les deux leviers de commande 80,82, suivant les flèches représentées sur la figure 4. Ceci a pour effet de faire tourner d'un quart de tour les pênes 46,48, dans des sens opposés, entre des positions de verrouillage dans les gâches 50,52 et de déverrouillage.

On a également représenté sur les figures 4 à 6, associés à chaque dispositif de verrouillage 24,26, des moyens d'interdiction de déverrouillage de ce dispositif lorsque l'organe de prise 54,56 est dans sa position éloignée de l'extrémité d'accrochage 46A,48A du pêne.

Ces moyens d'interdiction comprennent une butée 100,102 de blocage angulaire du pêne, solidaire de l'organe de prise 54,56, destinée à coopérer avec un contour complémentaire du levier de commande 80,82.

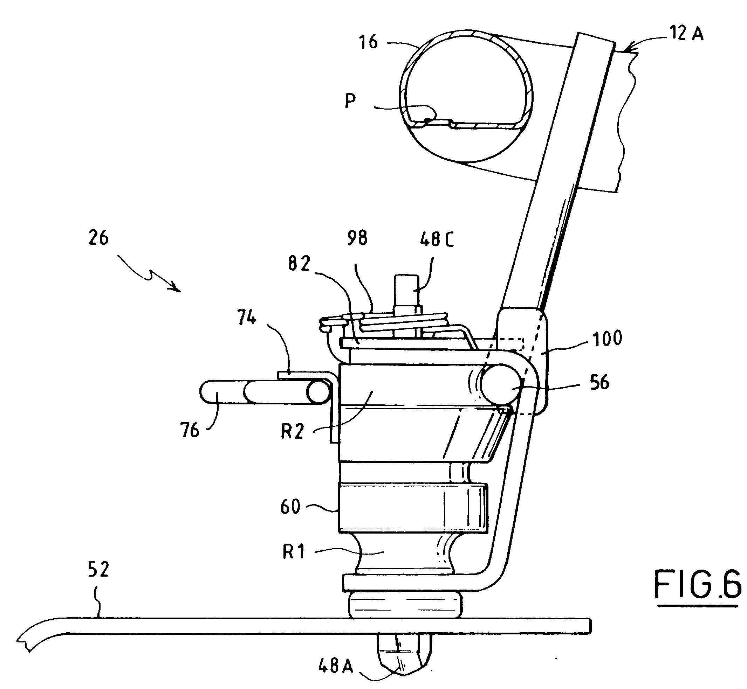

Lorsque l'organe de prise 54,56 est en position rapprochée de l'extrémité d'accrochage 46A,48A, comme cela est représenté notamment sur les figures 4 et 5, la butée 100,102 est séparée du levier de commande 80,82 correspondant. Lorsque l'organe de prise 54,56 est éloigné de l'extrémité d'accrochage 46A,48A, comme cela est représenté sur la figure 6, la butée 100,102 est en contact avec le levier de commande 80,82 correspondant.

On notera que les deux butées de blocage 100,102 forment également des organes de positionnement transversal des étriers 62,64 par rapport à l'armature 12.

En effet, le positionnement transversal des étriers est réalisé, d'une part, par la tringlerie de couplage 68 qui maintient un écartement constant entre ces étriers, et d'autre part, par les butées 100,102, solidaires de l'armature 12 (par l'intermédiaire des organes de prise 54,56), qui coopèrent avec des bords latéraux opposés des étriers (voir figure 4).

On décrira ci-dessous le fonctionnement du siège 10 selon l'invention.

On considère initialement le siège 10 accroché sur le plancher 32 dans sa position normale, comme cela est représenté sur la figure 1, et, en traits forts, sur la figure 2.

Les extrémités d'accrochage 46A,48A des pênes sont immobilisées dans les gâches 50,52, comme cela est représenté notamment sur les figures 3 à 7.

Les organes de prise 56,54 sont bloqués dans les rainures R1 des tambours 58,52, dans leur position rapprochée des extrémités d'accrochage 46A,48A.

Pour régler le siège 10 en site, c'est-à-dire pour faire basculer autour de l'axe T les parties d'assise 12A et de dossier 12D, l'occupant actionne la première manette de commande 76, dans le sens indiqué par la flèche sur la figure 4, à l'encontre de la force élastique de rappel du ressort 77. Ceci a pour effet de placer les tambours 58,60 dans leur position de déblocage des organes de prise 54,56. Ces derniers peuvent alors être déplacés axialement vers le haut, le long des pênes 54,56, jusqu'à hauteur des rainures R2 des tambours 58,60.

On notera que l'occupant déplace les organes de prise 54,56 entre leurs différentes positions axiales en exerçant un effort de basculement sur la partie de dossier 12D de l'armature.

Après relâchement de la première manette de commande 76, les tambours 58, 60 se replacent automatiquement en position de blocage pour bloquer les organes de prise 54,56 dans les rainures R2.

Le siège 10 est alors dans sa position de détente, comme cela est représenté en traits mixtes sur la figure 2.

On notera que, dans cette position du siège, les extrémités de commande 46C,48C des pênes 46,48 sont séparées de leur palier de guidage P.

Le déverrouillage des pênes est interdit du fait de la coopération des butées 100,102 avec les leviers de commande 80,82 (voir figures 4 et 6). Il n'est donc pas possible de séparer le siège 10 du plancher 32.

Pour décrocher le siège 10 du plancher 32, l'utilisateur fait tout d'abord basculer le siège 10 vers sa position normale en actionnant le levier de commande 76 de façon analogue à l'opération de réglage en site décrite précédemment.

Lorsque le siège est en position normale, les butées 100,102 sont écartées des leviers de commande 80,82 (voir figures 5 et 7) ce qui autorise le déverrouillage des dispositifs 24,26.

L'utilisateur déverrouille ces dispositifs 24,26 en actionnant la seconde manette de commande 86 à l'encontre de la force élastique de ressorts 96,98, de manière à faire tourner les pênes 46,48 dans des sens opposés, vers leur position de déverrouillage. Les pieds avant du siège sont ainsi libérés. On notera que, en position normale du siège, les extrémités de commande 46C,48C des pênes sont logées dans leur palier de guidage P ce qui permet une immobilisation des dispositifs de verrouillage 24,26 par rapport à l'armature 12 lorsque les pênes 46,48 sont séparés des gâches 50,52.

Le siège 10 peut être totalement séparé du plancher 32 pour être retiré de l'habitacle du véhicule en déboîtant les pieds arrière 28,30 des sabots 34,36. Le siège 10 peut ainsi être utilisé à l'extérieur du véhicule notamment à l'occasion d'un pique-nique.

Pour accrocher à nouveau le siège 10 sur le plancher 32, il suffit de procéder à l'inverse de l'opération de décrochage, tout d'abord, en emboîtant les pieds arrière 28,30 dans les sabots 34,36, puis en actionnant la seconde manette de commande 86 de manière à verrouiller les pênes 46,48 des pieds avant dans les gâches 50,52.

L'invention ne se limite pas au mode de réalisation décrit précédemment.

En particulier, l'invention peut s'appliquer aussi bien à un siège arrière qu'à un siège avant de véhicule automobile.

Par ailleurs, les dispositifs de verrouillage selon l'invention peuvent former aussi bien des pieds avant que des pieds arrière de siège.

Enfin, les tambours des dispositifs de verrouillage peuvent comporter plus de deux rainures annulaires de manière à définir plus de deux positions axiales des organes de prise par rapport au pêne correspondant à autant de positions de réglage en site du siège.

L'invention comporte de nombreux avantages.

En particulier, elle permet d'équiper l'habitacle d'un véhicule automobile d'un siège amovible, d'encombrement réduit, pouvant être réglé en site suivant au moins deux positions d'inclinaison du dossier.

## Revendications

1. Dispositif de verrouillage d'un élément (12A) d'armature de siège (12) de véhicule automobile sur un élément (32) de caisse de ce véhicule, du type comprenant un pêne (46,48) coopérant avec une gâche (50,52) reliée à l'élément (32) de caisse, le pêne (46,48) étant relié à l'élément (12A) d'armature par des moyens (54 à 64) de réglage de l'écartement entre cet élément (12A) d'armature et la gâche (50,52), **caractérisé en ce que** le pêne (46,48) a une forme générale de broche et est muni d'une extrémité (46A,48A) d'accrochage dans la gâche (50,52), les moyens de réglage d'écartement comprenant un organe de prise (54,56) solidaire de l'élément (12A) d'armature destiné à être bloqué entre un tambour de blocage (58,60), monté rotatif autour du pêne (46,48), et un étrier de blocage (62,64), porté par le pêne (46,48), enjambant le tambour (58,60) d'une extrémité à l'autre de ce tambour, le tambour (58,60) présentant un contour externe de contact avec l'organe de prise (54,56) qui est évolutif, d'une part, angulairement autour du pêne (46,48) pour permettre alternativement le blocage et le déblocage de l'organe de prise (54,56), et d'autre part, axialement le long du pêne (46,48) pour définir au moins deux positions axiales différentes de l'organe de prise (54,56), rapprochée et éloignée de l'extrémité d'accrochage (46A,48A), correspondant, lorsque le pêne (46,48) est accroché dans cette gâche, à deux écartements différents de l'élément (12A) d'armature et de la gâche (50,52).

2. Dispositif selon la revendication 1, caractérisé en ce que l'organe de prise (54,56) comprend une portion de tige, le contour évolutif du tambour (58,60) étant délimité, d'une part, par au moins un méplat (M) de déblocage de l'organe de prise (54,56), et d'autre part, par au moins deux rainures annulaires (R1,R2), espacées axialement, de positionnement axial de l'organe de prise (54,56), interrompues par le méplat (M).

3. Dispositif selon la revendication 1 ou 2, caractérisé en ce que le pêne (46,48) comprend une extrémité (46C,48C) de commande en rotation autour de son axe, opposée à son extrémité d'accrochage (46A,48A), cette dernière extrémité coopérant par emboîtement avec un orifice d'accrochage (50A,52A) ménagé dans la gâche (50,52), l'extrémité d'accrochage (46A,48A) et l'orifice d'accrochage (50A,52A) étant délimités par des contours complémentaires (C1,C2) d'immobilisation axiale du pêne (46,48) par rapport à la gâche (50,52), l'extrémité d'accrochage (46A,48A) étant déplaçable dans l'orifice d'accrochage (50A,52A) par rotation de pêne (46,48) autour de son axe entre des positions de verrouillage et de déverrouillage du pêne correspondant respectivement à des positions de séparation et de coopération des contours complémentaires (C1,C2) d'immobilisation axiale.

4. Dispositif selon la revendication 3, caractérisé en ce que le passage entre les positions de verrouillage et de déverrouillage du pêne (46,48) se fait par rotation de ce pêne d'une fraction de tour, notamment d'un quart de tour, aussi bien dans un sens que dans l'autre.

5. Dispositif selon la revendication 3 ou 4, caractérisé en ce que l'extrémité de commande (46C,48C) coopère, lorsque l'organe de prise (54,56) est dans sa position rapprochée de l'extrémité d'accrochage (46A, 48A), avec un palier (P) de guidage et de positionnement du pêne (46,48) par rapport à l'élément (12A) d'armature porté par cet élément (12A).

6. Dispositif selon l'une quelconque des revendications 3 à 5, caractérisé en ce qu'il comprend des moyens d'interdiction du déverrouillage du pêne (46,48) lorsque l'organe de prise (54,56) est dans sa position éloignée de l'extrémité d'accrochage (46A,48A), ces moyens d'interdiction comprenant des butées complémentaires (80, 82, 100, 102) de blocage angulaire du pêne (46,48) portées par l'organe de prise (54,56) et l'extrémité (46C,48C) de commande du pêne, les deux positions axiales rapprochée et éloignée de l'organe de prise (54,56) correspondant respectivement à deux positions de contact ou de séparation des butées complémentaires de blocage angulaire.

7. Siège pour véhicule automobile, du type comprenant une armature d'assise (12A) reliée à un plancher (32) de la caisse du véhicule, caractérisé en ce qu'il comporte une paire de dispositifs de verrouillage (24,26) selon l'une quelconque des revendications précédentes, les pênes (46,48) de ces dispositifs de verrouillage (24,26) étant reliés à l'armature d'assise (12A) et coopérant avec des gâches (50,52) reliées au plancher (32).

8. Siège selon la revendication 7, caractérisé en ce qu'il comporte de plus des premiers moyens (66) pour la commande commune des moyens de réglage d'écartement (54 à 64) des deux dispositifs de verrouillage (24,26), ces premiers moyens de commande (66) comportant une tringlerie (68) de couplage des tambours (58,60) définissant un parallélogramme articulé muni de quatre articulations matérialisées par les pênes (46,48) et les extrémités d'une tringle de couplage (70) articulées dans des ferrures (72,74) solidaires des tambours (58,60), une manette (76) de commande de tringlerie étant solidaire en rotation d'un des tambours (60).

9. Siège selon la revendication 7 ou 8, comprenant des dispositifs de verrouillage (24,26) selon la revendication 4, caractérisé en ce qu'il comporte de plus des seconds moyens (78) pour la commande commune du déverrouillage des dispositifs de verrouillage (24,26), ces seconds moyens de commande (78) comprenant deux leviers de commande (80,82) solidaires en rotation des deux extrémités de commande (46C,48C) des pênes, munis d'extrémités de manoeuvre respectives reliées entre elles par des moyens (84) de longueur variable, et une manette (86) de commande de déverrouillage reliée aux moyens de liaison (84) par un câble (88) à gaine (90) de type Bowden.

10. Siège selon la revendication 9, caractérisé en ce que les moyens de liaison (84) comprennent une tringle (92) munie d'une première extrémité accrochée sur un premier levier de commande (82) et d'une seconde extrémité portant une bague d'arrêt (94) d'une extrémité de la gaine (90), l'extrémité du câble (88) débouchant par cette extrémité de la gaine (90) étant accrochée sur le second levier de commande (80), de manière que l'actionnement du câble (88) réduise la longueur des moyens de liaison (84) et rapproche les deux leviers de commande (80,82) pour faire tourner les pênes (46,48) dans des sens opposés de déverrouillage.

11. Siège selon l'une quelconque des revendications 7 à 10, comprenant des dispositifs de verrouillage (24,26) selon la revendication 6, caractérisé en ce que les butées complémentaires de blocage angulaire des pênes (46,48) sont délimitées par des organes (100, 102) de positionnement transversal des étriers (62, 64) par rapport à l'armature (12A), portés par les organes de prise (54,56) et par les extrémités de manoeuvre des leviers de commande (80,82).

12. Siège selon l'une quelconque des revendications 7 à 11, caractérisé en ce qu'il comprend une paire de pieds avant (24,26) et une paire de pieds arrière (28,30) accrochés de façon amovible au plancher (32), les pieds avant étant constitués par les dispositifs de verrouillage (24,26) et les pieds arrière (28,30) étant accrochés au plancher (32) par emboîtement dans des sabots correspondants (34,36) reliés au plancher (32), les pieds arrière (28,30) et les sabots (34,36) étant délimités par des surfaces complémentaires d'emboîtement (38 à 42) matérialisant un axe (T) sensiblement transversal de pivotement du siège, ces surfaces d'emboîtement (38 à 42) permettant la rotation des pieds arrière (28,30) dans les sabots (34,36) autour de l'axe de pivotement (T) suivant une plage angulaire au-delà de laquelle les pieds arrière sont déboîtés des sabots, le réglage de l'écartement entre l'armature d'assise (12A) et les gâches (50,52) permettant un réglage en site du siège par basculement de ce siège autour de l'axe de pivotement (T).

13. Siège selon l'une quelconque des revendications 7 à 12, caractérisé en ce qu'il comporte une armature tubulaire pliée (12) de forme générale annulaire délimitant une traverse inférieure avant (16) d'assise et une traverse supérieure arrière (18) de dossier reliées entre elles par des longerons (20,22) présentant chacun un coude (20C,22C) séparant une partie d'assise (12A) et une partie de dossier (12D) de l'armature, les organes de prise (54,56) étant fixés sur l'armature (12) à proximité de la jonction de la traverse avant (16) et des longerons (20,22), et les pieds arrière (28,30) étant fixés sur les longerons (20,22) à proximité de leur coude (20C,22C).
